# EUROPEAN PATENT SPECIFICATION

(11) **EP 0 671 349 B1**
(45) Date of publication and mention of the grant of the patent: **03.09.1997**
(21) Application number: 95200519.7
(22) Date of filing: 02.03.1995
(51) Int. Cl.: B65G 17/38, B65G 17/06, B65G 47/38, B61B 5/02

(54) **Sorting device for discharging goods**
Sortieranlage zum Entladen von Gegenständen
Dispositif de triage pour décharger des articles

(30) Priority: 11.03.1994 NL 9400388
(43) Date of publication of application: 13.09.1995
(73) Proprietor: PROMECH SORTING SYSTEMS B.V., 2031 CW Haarlem (NL)
(72) Inventor: Duivenvoorden, Martinus Fredericus Johannes, NL-2191 BB De Zilk (NL); van Haaster, Patrick Theodorus Johannes, NL-2191 BX De Zilk (NL); van Hattum, Ernestus Joannes Maria, NL-2025 CD Haarlem (NL)
(74) Representative: Mathol, Heimen, Ir.

(56) References cited:
- EP-A- 0 391 575
- DE-A- 4 131 629
- FR-A- 1 338 570
- GB-A- 1 303 550

## Description

The invention relates to a sorting device for goods, comprising a driven endless conveyor, moveable along a closed circuit formed by a supporting section in which the conveyor is guided, further comprising a number of regularly mutually spaced carrier elements for the goods, each carrier element being formed by at least two trays which can be flapped open and downwards and which are all hingedly suspended from the conveyor, which trays in the working position together form a carrier tray for receiving, conveying and discharging the goods.

Such a device is known from Netherlands Patent Application 9001116, which has been laid open for inspection, and which constitutes a further development of NL-A- 7305636. These sorting devices are used in distribution systems in which certain batches of goods supplied have to be sorted and assembled in a certain combination for delivery to subsequent distribution channels.

Netherlands Patent Application 7305636 relates to such a sorting device for goods, in which a first step was taken towards the development of the so-called splitter trough. This trough, consisting of two halves, is supported at one side and moved along by means of a carrier frame, which is supported at one side in such a way that it travels along a fixed structure, and is connected at that side to an endless conveyor. The endless conveyor is in the form of a cable circulating in a closed circuit, which consists of two return pulleys and two straight flights.

In Netherlands Patent Application 9001116, laid open for inspection more recently, the shape and the suspension of the splitter trough has been improved, but the layout and drive have remained essentially the same.

A disadvantage of such a device is that the shape of the circuit of the endless conveyor element is an essentially elongated loop running around the two return pulleys, and lying in a horizontal plane. In this case the curves can be negotiated only towards one side, during which the adjacent splitter troughs move away from each other. A curve to the other side is blocked by the troughs colliding against each other. This means that it is not possible to adjust the circuit flexibly to the space available for the sorting device, with the result that optimum use cannot be made of this space.

Another disadvantage of this sorting device is that the speed of movement of the conveyor element, and consequently the sorting capacity of the device, is determined by the diameter of the two return pulleys around which the conveyor element of the sorting device runs. Due to the fact that for manufacturing reasons the return pulleys are restricted to a maximum diameter, this also determines the maximum circulating speed of the conveyor element, since at too high a circulating speed the goods in the splitter troughs are flung out of said troughs through the centrifugal force at the return pulleys.

The object of the device according to the invention is to avoid the abovementioned disadvantages, while the sorting device has a high sorting capacity and can travel along any desired circuit.

This object is achieved by the device according to the invention through the facts that the flap-open trays, which together form a carrier element, are supported in a window-shaped frame guided on either side of the circuit in a supporting section, and in that each frame is pivotally coupled in a central region to the frames of both adjacent carrier elements, in such a way that the conveyor is composed of a series of intercoupled frames. The conveyor can in this case be driven by way of, for example, a contact means which is disposed on a longitudinal side of each frame while the actual driving device consists of a local propulsion means.

The advantage of such a device is that the conveyor is guided by two parallel supporting sections lying opposite each other, so that no return pulleys need be used. The curves of the circuit can consequently have a relatively large diameter, with the result that a greater speed of movement of the conveyor will become possible and the sorting capacity can be increased.

Another advantage is that the device permits clockwise and anticlockwise curves in the circuit, with the result that the device can be adapted in the optimum way to the available space.

In an advantageous embodiment of the sorting device, for the connection of each frame to adjacent frames said frame is provided at the front and rear side with coupling means which permit a pivoting movement both in the plane of the frame and in a plane at right angles thereto, lying in the direction of forward movement.

The advantage of this is that the conveyor can travel through a circuit with ascending or descending paths, with the result that a circuit can also run through, for example, several floors of a building.

In a further preferred embodiment of the sorting device each tray is mounted in such a way that it can rotate about a shaft, each end of each shaft being accommodated in an auxiliary frame which is hingedly supported by a hinge means in the window-shaped frame, while the auxiliary frame and the shafts together form the main intermediate frame.

The advantage of this is that the goods accommodated in a conveyor element remain lying horizontally in the carrier element during conveyance in the ascending or descending path and do not shift therein, with the result that an accurate discharge of the goods is possible.

These measures permit an increase in the sorting capacity of the sorting device and better utilization of its available space, while an accurate discharge of the goods is still achieved.

The present invention is illustrated further with reference to appended drawings, in which:
Fig. 1 shows a side view of the ascending path with the conveyor of the sorting device according to the invention;
Fig. 2 shows a top view of frames coupled together, each provided with a carrier element;
Fig. 3 shows a side view of a frame with the carrier element shown in Fig. 2;
Fig. 4 shows the section along the line II-II of the frame with the carrier element of Fig. 3;
Fig. 5 shows an enlarged illustration of the section along the line V-V of the coupling between two frames of Fig. 2;
Fig. 6 shows a side view of the descending path of the circuit of the sorting device.

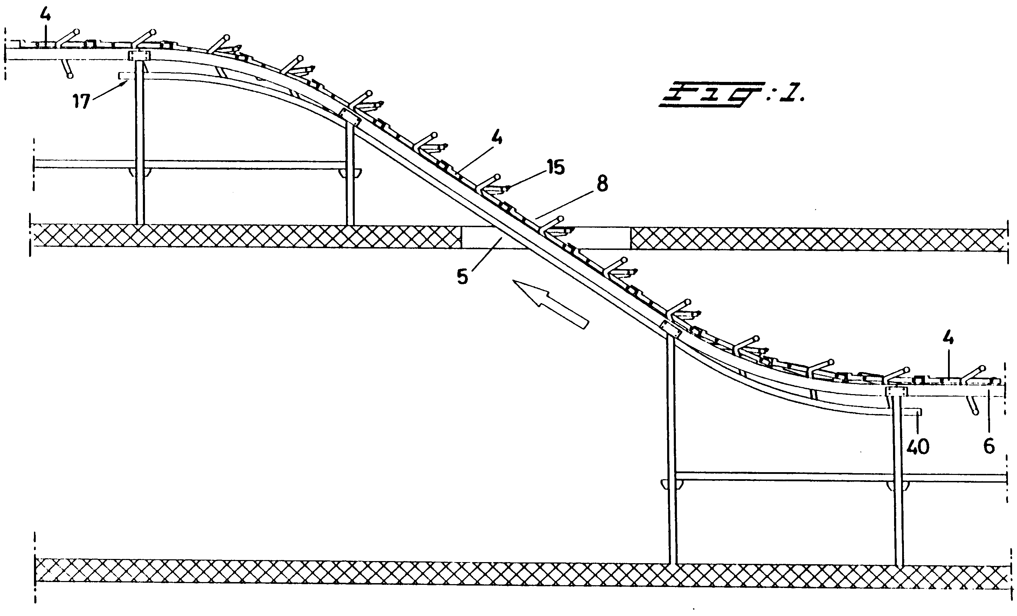

Fig. 1 shows a part of the device according to the invention in which the endless conveyor 8 is travelling along an ascending path of a closed circuit 5.

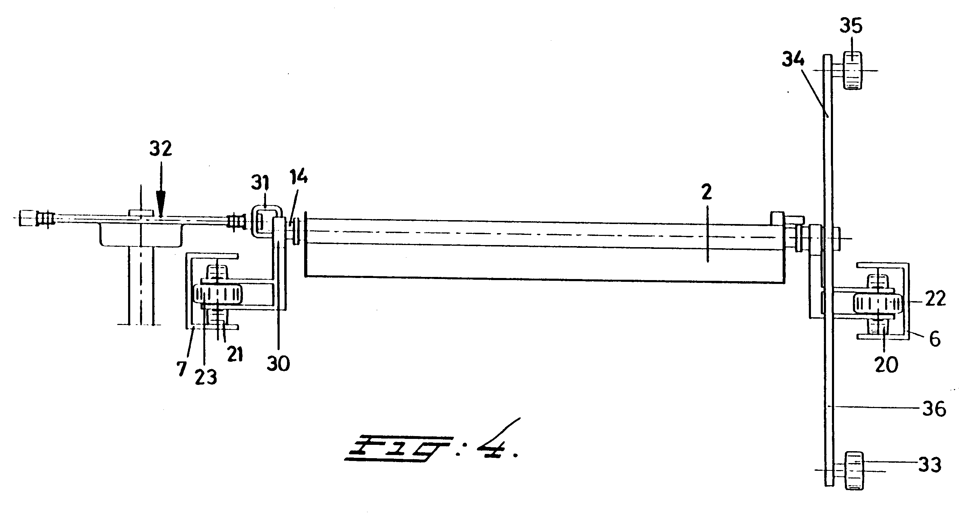

The closed circuit 5 is formed by two U-shaped supporting sections 6, 7 lying parallel to and opposite each other (see also Fig. 4), the openings of which face each other. In the case of the ascending path part of the circuit 5 a U-shaped guide section 40 is fixed below the supporting section 6, the opening of which guide section lies at the same side as the opening of the supporting section 6.

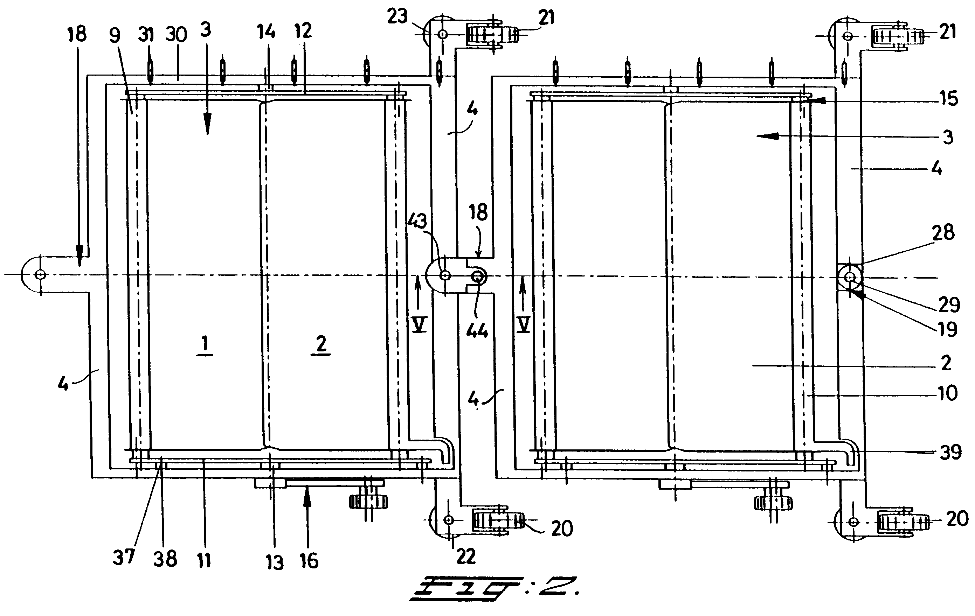

Figures 1 and 2 show a conveyor 8 which is formed by a number of window-shaped frames 4 which are hingedly coupled to each other and each enclose a carrier element 3.

As can be seen from Fig. 2, the carrier element 3 is formed into a single unit by two trays 1, 2 which can be flapped open downwards. The tray 2 is provided with a closing stop 39, the free end of which projects beyond the carrier element 3 at the side of the intermediate frame part 11.

Each tray 1, 2 is mounted in such a way that it can rotate about a fixed shaft 9, 10. Each end of said shaft 9, 10 can be accommodated directly in the frame 4 or, as shown in the preferred embodiment in Fig. 2, in an auxiliary frame 11, 12.

The carrier element 3 is hingedly supported inside the frame 4 by hinge means 13, 14. The hinge means 13, 14 are placed in the centre of the auxiliary frame 11, 12 and connect said auxiliary frame 11, 12 to frame 4. The auxiliary frame 11, 12 and the fixed shafts 9 and 10 together form an intermediate frame 15 which is supported in the frame 4 in such a way that it can pivot about a horizontal axis 30 lying at right angles to the direction of travel.

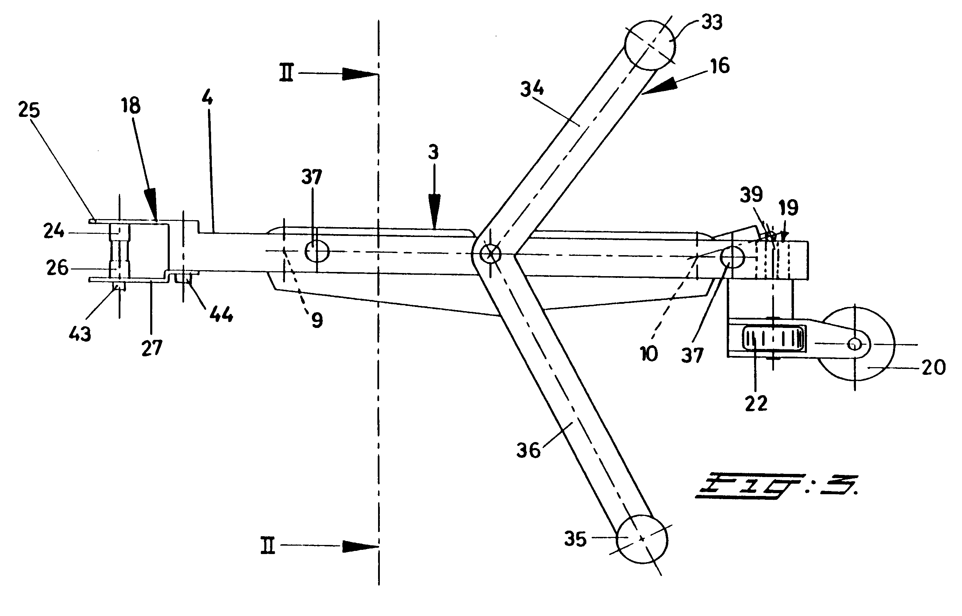

Fig. 3 shows a guide lever 16 which passes through the frame 4 and is fixed to the centre of the auxiliary frame 11. In a preferred embodiment the guide lever 16 consists of an upper guide arm 34 which slants upwards towards the fixed shaft 10 and to which a guide roller 33 is fixed, and a lower guide arm 36 which slants downwards towards the fixed shaft 10 and which is provided with a guide roller 35.

The auxiliary frame 11 also has a recess 37 for snap-receiving a spring-loaded ball element 38 accommodated in the frame 4.

As can be seen from Figures 2 - 4, the frame 4 is provided under its lower face, near the rear and byond both longitudinal sides, with guide rollers 22 and 23 which can rotate about a vertical axis. There are two further supporting rollers 20 and 21 which lie behind them and can rotate about a common horizontal axis. In Fig. 4 it can also be seen clearly that both the guide roller 23 and the supporting roller 21 are in contact with the supporting section 7, and that both the guide roller 22 and the supporting roller 20 are in contact with the supporting section 6.

It can also be seen in Fig. 2 and in Fig. 4 that one longitudinal side of the frame 4 comprises several contacting means 31 positioned at regular intervals. A drive means 32, which will be discussed further on, engages these contacting means.

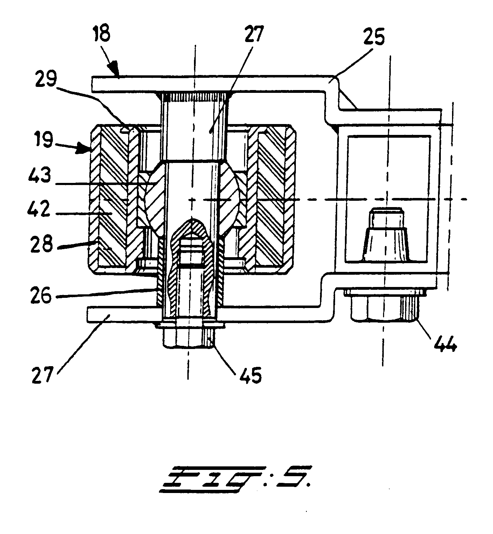

Each frame 4 is hingedly coupled to the frame 4 of the two adjacent carrier elements 3, as can be seen from Figures 2 and 5. For this purpose, in the central region, preferably on the longitudinal axis, the frame 4 is provided with a first coupling means 18 at the front, and with a second coupling means 19 at the rear side.

The second coupling means 19 is disposed in the longitudinal central plane in the rear part of the frame 4. The second coupling means 19 comprises an inner sleeve 29 which is enclosed by a resilient material 42 and is accommodated inside an outer sleeve 28 in such a way that it can tilt.

In the enlarged illustration of the section of the coupling of the frames in Fig. 5 it can be seen that the first coupling means 18 is formed by a lug or plate 25 fixed on the top side of the frame 4 and provided with a pin 24. The first coupling means 18 also comprises a locking plate 27 detachably mounted to the underside of the same frame 4 by means of a screw bolt 44 and provided with a pin accomodating means 26.

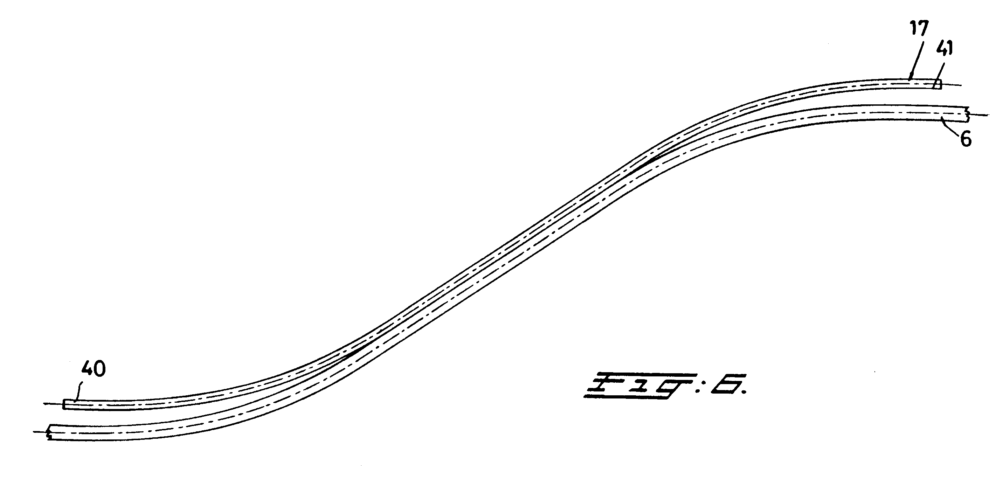

Finally, Fig. 6 shows a descending path of the circuit 5. This figure indicates how the cam face 17, formed by a U-shaped section 41, runs relative to the supporting section 6 situated below it. The U-shaped guide section 41 is fixed in such a way that the opening of the U-section faces in the same direction as the opening of the supporting section 6.

The device according to the invention is used for picking out goods in discharge stations (not shown) which are situated below the closed circuit 5. The endless conveyor 8 which is travelling within this circuit is composed by a large number of interconnected frames 4, each having a carrier element 3 for conveying the goods to be sorted out. In order to be able to discharge the goods at the desired place, the carrier element 3 has two trays 1, 2 which can be flapped open downwards and can pivot about shafts 9, 10, and which are opened and closed in a manner known per se.

Each frame is supported on either side at the corner points by the supporting rollers 20, 21 in the sections 6, 7 respectively. As a result of this, and through the fact that the supporting rollers 20, 21 are placed below or near the coupling means 18, 19, the centre of gravity of a carrier element 3 provided with goods always lies between four supporting rollers of two interconnected frames 4. This means that the optimum weight distribution over the supporting rollers 20, 21 is achieved, with the result that the overall stability of the conveyor 8 is increased and the wear on the device is reduced.

The guide rollers 22, 23, which are in contact with the vertical walls of the parallel U-shaped supporting sections 6, 7, prevent the endless conveyor 8 from being able to run out of the circuit 5. The guide rollers 22, 23 also prevent said conveyor from being able to shift sideways within the circuit 5, so that the discharge of goods can occur accurately everywhere within the circuit 5.

In order to couple two frames 4 together, the pin 24 fixed to the first frame 4 is inserted into a pivotal bearing 43 in the inner sleeve 29 of the coupling means 19 of the adjacent frame 4 lying in front of it. The detachable locking plate 27 is then provisionally attached by means of the screw bolt 44 to the frame 4. After this, the free end of the pin 24 which is inserted into the pin accomodating means 26, is firmly mounted by tightening a second screw bolt 45. This produces a hinge coupling between two adjacent frames 4, which coupling can be pivoted about several axes by means of the pivotal bearing 43.

The inner sleeve 29 enclosed by a resilient material cushions the impacts and shocks of the frames 4 coupled together in the endless conveyor, with the result that the endless conveyor 8 can move in a relatively noiseless manner along the circuit 5.

Due to the fact that the coupling lies in the longitudinal central plane of the frame 4 and the first coupling means 18 projects in front of the frame 4, it becomes possible for the endless conveyor to travel along clockwise and anticlockwise paths and also ascending and descending paths. The frames coupled together can also be rotated relative to each other about their longitudinal axis, with the result that slanting paths and curves in a circuit can be negotiated by a conveyor without any problems. It has also become possible to form clockwise or anticlockwise curves with a relatively large cross-section, with the result that the centrifugal force acting upon the goods is reduced and the speed of travel of the conveyor, and thus also the sorting capacity of the device, can be increased.

In the embodiment in which the carrier element 3 is stationary within the plane of the frame 4, it can happen that when there is too great an ascending or descending angle of the circuit 5, the goods start to slip inside the carrier element 3.

In order to prevent this, in a preferred embodiment the carrier element 3 is pivotally suspended in the frame 4 by means of hinge means 13 and 14. Although the hinges 13 and 14 can lie in line with each other near the front or the rear side of the frame 4, it is preferable from the point of view of stability that they lie in line with each other in the centre of the frame 4. Since the trays 1 and 2 of a carrier element 3 ascend towards the front and rear side of the frame 4, the goods are automatically positioned in the centre of the carrier element 3. In the case of an ascending or descending path of the circuit 5, due to the fact that the hinges 13 and 14 lie in the centre of the auxiliary frames 11 and 12, and due to the fact that the mass centre of the goods also lies on this centre line, the carrier element 3 can be held in the horizontal position by the influence of gravity.

In those cases in which the conveyor 8 has to travel along at relatively high speed through ascending or descending paths with a very large angle of gradient or descent, each pivotal carrier element 3 can be provided with a guide lever 16. The guide lever 16 ensures that in these paths the carrier element 3 is forceably held in the horizontal position preventing the carrier element 3 from starting to rock, which could cause the goods which it contains to shift.

In a preferred embodiment the guide lever 16 comprises two arms 34 and 36. In an ascending path of the circuit 5 the carrier element 3 of a moving conveyor 8 is held in the horizontal position through the fact that the roller 35 mounted on the arm 36, is guided in the section 40. During a descending path of the circuit 5 the roller 33 fixed on the arm 34 is guided in a section 41, as a result of which the carrier element 3 is also held horizontally in this path.

When the endless conveyor 8 travels along a horizontal path of the circuit 5 the carrier element 3, which is pivotally suspended inside the frame 4, is retained within the plane of the frame 4. This means that no guide section for the guide lever 16 is needed along this part of the circuit 5. The horizontal retaining of the carrier element 3 inside the frame 4 is achieved in a preferred embodiment by a spring urged ball element 38 accommodated in the frame 4 which clicks into the recess 37 of the auxiliary frame 11.

The endless conveyor 8 is driven by one or more external drive units at one or more points along a part of the circuit 5 to be travelled. The conveyor 8 can be driven by linear motors or by a drive means which acts upon the contacting means 31 which are mounted on the longitudinal side 12 of the frame 4.

As mentioned earlier, the carrier element 3 with the trays 1 and 2 is closed in an already known manner. In the device according to the invention the tray 2 has a closing stop 39 for this purpose, the free end of which stop projects beyond the carrier element 3. This has the advantage that a closing mechanism coupled to the circuit 5 lies outside the carrier face of the carrier element 3, with the result that the carrier element 3 can be completely filled with the goods to be conveyed and picked out.

## Claims

1. Device for sorting goods, comprising a driven endless conveyor (8) moveable along a closed circuit formed by a supporting section in which the conveyor (8) is guided, further comprising a number of regularly mutually spaced carrier elements (3) for the goods, each carrier element (3) being formed by at least two trays (1, 2) which can be flapped open and downwards and which are all hingedly suspended from the conveyor (8), and which trays (1, 2) in the working position together form a carrier tray for receiving, conveying and discharging the goods, **characterized in that** the flap-open trays (1, 2), which together form a carrier element (3), are supported in a window-shaped frame (4) guided on either side of the circuit (5) in a supporting section (6, 7), and in that each frame (4) is pivotally coupled in a central region to the frames (4) of both adjacent carrier elements (3), in such a way that the conveyor (8) is composed of a series of intercoupled frames.

2. Sorting device according to claim 1, **characterized in that** each frame (4) is connected to adjacent frames at its front and rear side with coupling means which permit a pivoting movement both in the plane of the frame and in a plane at right angles thereto, lying in the direction of forward movement.

3. Sorting device according to claim 1, in which each tray (1, 2) is mounted in such a way that it can rotate about a fixed shaft (9, 10), **characterized in that** both ends of each shaft (9, 10) are mounted in an auxiliary frame (11, 12) which is supported by a pivot means (13, 14) in the window-shaped frame (4), while the auxiliary frame (11, 12) and the shafts (9, 10) together form an intermediate frame (15).

4. Sorting device according to claim 3, **characterized in that** at least one auxiliary frame (11, 12) has a guide lever (16) capable to interact locally with a cam face (17) for holding the carrier element (3) in a horizontal position.

5. Sorting device according to claim 4, **characterized** **in that** the guide lever (16) is formed by an upper arm (34) which slants upwards towards the fixed shaft (10) and which is provided with a roller (33), and by a lower arm (36) which slants downwards towards the fixed shaft (10) and which is provided with a roller (35).

6. Sorting device according to claim 5, **characterized in that** a cam face (17), formed by a first U-shaped guide section (40) for the guide roller (33), is disposed below the part of the supporting section (6) which slants upwards in the direction of travel of the conveyor, and in that a second U-shaped guide section (41) is disposed as a guide for the guide wheel (35) above the part of the supporting section (6) which slants downwards in the direction of travel of the conveyor.

7. Sorting device according to claim 4 or 5, **characterized in that** an auxiliary frame (11, 12) has at least one recess (37) for the reception of a spring-loaded ball element (38) accommodated in the frame (4).

8. Sorting device according to one of the preceding claims, **characterized in that** pivot means (13, 14), a first coupling means (18) and a second coupling means (19) are provided on the frame (4), and in that supporting rollers (20, 21) and guide rollers (22, 23) are rotatably mounted on the frame (4), the rollers being in contact with the supporting sections (6, 7).

9. Sorting device according to claim 8, **characterized in that** the first coupling means (18) is provided in the longitudinal central plane at the front side of the frame (4) and is formed by a plate (25) fixed on the top side of the frame (4) and provided with a pin (24), and by a locking plate (27) detachably mounted on the underside of the frame (4) and provided with a pin accommodating means (26).

10. Sorting device according to claim 9, **characterized in that** the second coupling means (19) is mounted in the longitudinal central plane at the rear side of the frame (4) and is formed by an inner sleeve (29) which is enclosed by a resilient material (42), said inner sleeve being pivotally accommodated inside an outer sleeve (28) and in that a pivotal bearing (43) is disposed within the inner sleeve for the accommodation of the pin (24) of the first coupling means (18).

11. Sorting device according to one of claims 8 - 10, **characterized in that** a longitudinal side (30) of the frame (4) comprises one or more regularly spaced contacting means (31) capable of cooperation with a drive means (32).

12. Sorting device according to claim 1 or 2, in which the tray (2) has a closing stop (39), **characterized in that** the free end of the closing stop (39) projects beyond the carrier element (3) at the side of the auxiliary frame (11).

## Patentansprüche

1. Anlage zum Sortieren von Gegenständen, mit einem angetriebenen Endlosförderband (8), welches entlang einer in sich geschlossenen, durch einen das Förderband (8) führenden Stützabschnitt gebildeten Bahn bewegbar ist, mit einer Anzahl gleichmäßig zueinander beabstandeten Trägerelemente (3) für die Gegenstände, wobei jedes Trägerelement (3) durch mindestens zwei nach unten aufklappbare, an dem Förderband (8) drehgelenkig angeordnete Bodenteile (1,2) gebildet ist und wobei die Bodenteile (1,2) in ihrer Arbeitsstellung gemeinsam einen Tragboden zur Aufnahme, zum Transport und zum Entladen der Gegenstände bilden, **dadurch gekennzeichnet**, daß die aufklappbaren Bodenteile (1,2), die zusammen ein Trägerelement (3) bilden, von einem fensterförmigen Rahmen (4) gestützt sind, der auf jeder Seite der Bahn (5) jeweils in einem Stützabschnitt (6,7) geführt ist, und daß jeder Rahmen (4) in seinem mittleren Bereich an den Rahmen (4) der benachbarten Trägerelemente (3) derart drehbar befestigt ist, daß das Förderband (8) durch eine Reihe aneinander befestigter Rahmen gebildet ist.

2. Sortieranlage nach Anspruch 1, **dadurch gekennzeichnet**, daß jeder Rahmen (4) an dem benachbarten Rahmen an seiner Vorderseite und seiner Rückseite mit Verbindungsmitteln befestigt ist, die eine Schwenkbewegung in der Rahmenebene und in einer dazu rechtwinklig angeordneten, in Richtung der Vorwärtsbewegung liegenden Ebene erlauben.

3. Sortieranlage nach Anspruch 1, bei der jedes Bodenteil (1,2) um eine feststehende Welle (9,10) drehbar angeordnet ist, **dadurch gekennzeichnet**, daß beide Enden jeder Welle (9,10) in einem Hilfsrahmen (11,12) befestigt sind, der mittels Drehgelenken (13,14) von den fensterförmigen Rahmen (4) getragen wird, wobei der Hilfsrahmen (11,12) und die Wellen (9,10) zusammen einen Zwischenrahmen (15) bilden.

4. Sortieranlage nach Anspruch 3, **dadurch gekennzeichnet**, daß mindestens ein Hilfsrahmen (11,12) einen Führungshebel (16) aufweist, welcher lokal mit einer Nockenfläche (17) zusammenwirkt, um das Trägerelement (3) in einer horizontalen Lage zu halten.

5. Sortieranlage nach Anspruch 4, **dadurch gekennzeichnet**, daß der Führungshebel (16) durch einen aufwärts in Richtung der festen Welle (10) geneigten und mit einer Rolle (33) versehenen oberen Arm (34) und durch einen abwärts in Richtung der festen Welle (10) geneigten und mit einer Rolle (35) versehenen unteren Arm (36) gebildet ist.

6. Sortieranlage nach Anspruch 5, **dadurch gekennzeichnet**, daß eine durch einen ersten U-förmigen Führungsabschnitt (40) für die Führungsrolle (33) gebildete Nockenfläche (17) unter dem Teil des Stützabschnitts (6), der aufwärts in Richtung der Bewegung des Förderbands geneigt ist, angeordnet ist, und daß ein zweiter U-förmiger Führungsabschnitt (41) als Führung für die Führungsrolle (35) oberhalb des Teils des Stützabschnitts (6), der nach unten in Richtung der Bewegung des Förderbands geneigt ist, angeordnet ist.

7. Sortieranlage nach Anspruch 4 oder 5, **dadurch gekennzeichnet**, daß ein Hilfsrahmen (11,12) mindestens eine Ausnehmung (37) zur Aufnahme eines federbelasteten Kugelelements (38) in dem Rahmen (4) vorgesehen ist.

8. Sortieranlage nach einem der voranstehenden Ansprüche, **dadurch gekennzeichnet**, daß Drehgelenke (13, 14), ein erstes Verbindungsmittel (18) und ein zweites Verbindungsmittel (19) an dem Rahmen (4) vorgesehen sind, und daß Stützrollen (20,21) und Führungsrollen (22,23) drehbar am Rahmen (4) befestigt sind, wobei die Rollen mit den Stützabschnitten (6,7) in Verbindung stehen.

9. Sortieranlage nach Anspruch 8, **dadurch gekennzeichnet**, daß das erste Verbindungsmittel (18) in der Längsmittelebene an der Vorderseite des Rahmens (4) vorgesehen ist und durch eine auf der Oberseite des Rahmens (4) befestigte und mit einem Stift (24) versehene Platte (25) gebildet ist, und durch eine an der Unterseite des Rahmens (4) lösbar befestigte und mit einer Stiftaufnahme (26) versehene Verschlußplatte (27).

10. Sortieranlage nach Anspruch 9, **dadurch gekennzeichnet**, daß das zweite Verbindungsmittel (19) in der Längsmittelebene an der Rückseite des Rahmens (4) befestigt ist und durch eine von einem nachgiebigen Material (42) umschlossene innere Büchse (29) gebildet ist, die schwenkbar in einer äußeren Büchse (28) angeordnet ist, und daß ein Schwenklager (43) innerhalb der inneren Büchse zur Aufnahme des Stifts (24) des ersten Verbindungsmittels (18) angeordnet ist.

11. Sortieranlage nach einem der Ansprüche 8 bis 10, **dadurch gekennzeichnet**, daß eine Längsseite (30) des Rahmens (4) ein oder mehrere gleichmäßig zueinander beabstandete, mit einem Antrieb (32) zusammenwirkende Kontaktmittel (31) aufweist.

12. Sortieranlage nach Anspruch 1 oder 2, bei der das Bodenteil (2) einen Schließanschlag (39) aufweist, **dadurch gekennzeichnet**, daß das freie Ende des Schließanschlags (39) über das Trägerelement (3) auf der Seite des Hilfsrahmens (11) hinausragt.

## Revendications

1. Dispositif pour trier des marchandises, comprenant un transporteur sans fin entraîné (8), mobile le long d'un circuit fermé formé par une section de support dans laquelle ce transporteur (8) est guidé, comprenant en outre un certain nombre d'éléments porteurs, espacés mutuellement de façon régulière (3) pour les marchandises, chaque élément porteur (3) étant formé par au moins deux plateaux (1, 2) qui peuvent s'ouvrir en se rabattant vers le bas, et qui sont tous suspendus de manière articulée au transporteur (8), ces plateaux (1, 2), dans leur position de travail, formant ensemble un plateau porteur pour recevoir, transporter et décharger les marchandises, caractérisé en ce que les plateaux à rabats ouvrants (1, 2), qui forment ensemble un élément porteur (3), sont supportés dans un cadre en forme de fenêtre (4), guidé de chaque côté du circuit (5) dans la section de support (6, 7), et en ce que chaque cadre (4) est couplé de façon pivotante dans une région centrale aux cadres (4) des deux éléments porteurs adjacents (3), d'une manière telle que le transporteur (8) soit composé d'une série de cadres accouplés.

2. Dispositif de triage suivant la revendication 1, caractérisé en ce que chaque cadre (4) est relié aux cadres adjacents par ses côtés avant et arrière avec des moyens de couplage qui permettent un mouvement pivotant, a la fois dans le plan du cadre et dans un plan perpendiculaire à celui-ci, s'étendant dans la direction du mouvement d'avancement.

3. Dispositif de triage suivant la revendication 1, dans lequel chaque plateau (1, 2) est monté d'une manière telle qu'il puisse tourner autour d'un arbre fixe (9, 10), caractérisé en ce que les deux extrémités de chaque arbre (9, 10) sont montées dans un cadre auxiliaire (11, 12), supporté par des pivots (13, 14) dans le cadre en forme de fenêtre (4), alors que le cadre auxiliaire (11, 12) et les arbres (9, 10) forment ensemble un cadre intermédiaire (15).

4. Dispositif de triage suivant la revendication 3, caractérisé en ce qu'au moins un cadre auxiliaire (11, 12) comporte un levier de guidage (16), capable d'interférer localement avec une came plate (17) afin de maintenir l'élément porteur (3) dans une position horizontale.

5. Dispositif de triage suivant la revendication 4, caractérisé en ce que le levier de guidage (16) est formé par un bras supérieur (34) qui s'incline vers le haut, vers l'arbre fixe (10), et qui est pourvu d'un galet (33), et par un bras inférieur (36) qui s'incline vers le bas, vers l'arbre fixe (10), et qui est également pourvu d'un galet (35).

6. Dispositif de triage suivant la revendication 5, caractérisé en ce qu'une came plate (17), formée par une première section de guidage en forme de U (40) pour le galet de guidage (33), est disposée en dessous de la partie de la section de support (6) qui s'incline vers le haut, dans la direction du déplacement du transporteur, et en ce qu'une seconde section de guidage en forme de U (41) constitue un guide pour la roue de guidage (35), au-dessus de la partie de la section de support (6) qui s'incline vers le bas, dans la direction du déplacement du transporteur.

7. Dispositif de triage suivant la revendication 4 ou 5, caractérisé en ce qu'un cadre auxiliaire (11, 12) a au moins un évidement (37) pour la réception d'un élément à bille chargée par ressort (38), logé dans le cadre (4).

8. Dispositif de triage suivant l'une des revendications précédentes, caractérisé en ce que des pivots (13, 14), des premiers moyens de couplage (18) et des seconds moyens de couplage (19), sont prévus sur le cadre (4), et en ce que des galets de support (20, 21) et des galets de guidage (22, 23) sont montés de façon rotative sur ce cadre (4), les galets étant en contact avec les sections de support (6, 7).

9. Dispositif de triage suivant la revendication 8, caractérisé en ce que les premiers moyens de couplage (18) sont prévus dans le plan central longitudinal sur le côté avant du cadre (4) et sont formés par une plaque (25), fixée sur le côté supérieur du cadre (4) et pourvue d'une broche (24), et par une plaque de blocage (27), montée de façon détachable sur le côté inférieur du cadre (4) et pourvue de moyens de logement de la broche (26).

10. Dispositif de triage suivant la revendication 9, caractérisé en ce que les seconds moyens de couplage (19) sont montés dans le plan central longitudinal sur le côté arrière du cadre (4) et sont formés par une douille intérieure (29), entourée par une matière résiliente (42), cette douille intérieure étant logée de façon pivotante à l'intérieur d'une douille extérieure (28), et en ce qu'un palier pivotant (43) est disposé dans la douille intérieure pour le logement de la broche (24) des premiers moyens de couplage (18).

11. Dispositif de triage suivant l'une des revendications 8 à 10, caractérisé en ce qu'un côté longitudinal (30) du cadre (4) comprend un ou plusieurs moyens de mise en contact espacés de manière régulière (31), capables de coopérer avec des moyens d'entraînement (32).

12. Dispositif de triage suivant la revendication 1 ou 2, dans lequel le plateau (2) a un arrêt de fermeture (39), caractérisé en ce que l'extrémité libre de cet arrêt de fermeture (39) se projette au-delà de l'élément porteur (3), sur le côté du cadre auxiliaire (11).
